# EUROPEAN PATENT APPLICATION

(11) **EP 0 889 013 A1**
(43) Date of publication of application: **07.01.1999**
(21) Application number: 97401516.6
(22) Date of filing: 30.06.1997
(51) Int. Cl.: C04B 35/26, C09D 5/32

(54) **A paint composition for absorbing electromagnetic waves and a method for manufacturing the same**

(71) Applicant: Hong, Sung-Yong, Seoul (KR)
(72) Inventor: Hong, Sung-Yong, Kangnam-Ku, Seoul (KR)
(74) Representative: Degret, Jacques

(57) **Abstract**

A paint composition for absorbing electromagnetic waves and a method for manufacturing the same are disclosed. The paint composition comprises by weight 45% and 65% a ceramic composition, by weight between 7% and 12% an acryl resin, by weight between 20% and 40% a solvent, and by weight between 3% and 8% an additive. The ceramic composition comprises a raw powder comprising by weight between 60% and 80% Fe₂O₃, between 15% and 25% ZnO, between 3% and 8% CuO, and between 3% and 8% NiO, and a mixture around the raw powder comprising by weight between 30% and 50% water, between 0.2% and 0.6% a dispersing agent, between 0.5% and 1.0% a plasticizer, and between 0.1% and 0.4% a lubricant. The paint composition absorbs electromagnetic waves generated from electric devices when it is coated on an inside or an outside of a housing of the electric devices.

## Description

### Background of the Invention

### 1. Field of the Invention

The present invention relates to a paint composition and a method for manufacturing the same, and more particularly to a paint composition for efficiently absorbing electromagnetic waves generated from electric devices such as cellular phones, beepers, computers, cordless telephones, televisions, vacuum cleaners, humidifiers, hair driers, refrigerators, washing machines, electric components in an automobile, etc. by coating the paint composition on an inside or an outside of the housing of the electronic devices, and a method for manufacturing the same.

The present invention is an improvement of the invention disclosed at U.S. Ser. No. 08/735,794 entitled "A CERAMIC COMPOSITION FOR ABSORBING ELECTROMAGNETIC WAVE AND A METHOD FOR MANUFACTURING THE SAME" which is now pending in USPTO and is subject to an obligation to the assignee of this application.

At present, many electric devices such as cellular phones, beepers, computers, cordless telephones, televisions, vacuum cleaners, humidifiers, hair driers, refrigerators, washing machines, electric components in an automobile, etc., are utilized during daily life. It is necessary to use these electric devices in modem daily life, but most of these devices radiate electromagnetic waves outside. It is well known to everybody that the electromagnetic waves generated from these electric devices are harmful to people who use these electric devices.

According to the safety standard of specific absorption rate (SAR) of electromagnetic waves which was established by the American National Standard Institute (ANSI) in 1982, a certain damage, especially heat damage, may occur in a human body when the specific absorption rate (SAR) of electromagnetic waves becomes more than 4mW/g to 8mW/g. Such a safety standard of the SAR may be further lowered according to further studies about the damage to the human body by electromagnetic waves. Now, many countries in the world have established the safety standard of the SAR in order to protect the human body from electromagnetic waves.

Hence, research for shielding the harmful electromagnetic waves generated from these electric devices is being continued. As a result of the research, an ultrasonic vibrator using ferrite or nickel which is mounted on the front of the electric devices is known for preventing electromagnetic waves from reaching the human body. Also. methods of wrapping the electric devices by using copper and packaging the electric devices by using Y₂O₃ are known for shielding the electromagnetic waves generated from the electric devices.

However, the above-described vibrator and methods can't sufficiently block the electromagnetic waves generated from the electric devices; and the structures of these devices are complicated or the manufacturing cost is expensive.

In the meantime, Hong et. al., including the present inventor of this application, filed to USPTO an application entitled "A CERAMIC COMPOSITION FOR ABSORBING ELECTROMAGNETIC WAVE AND A METHOD FOR MANUFACTURING THE SAME" (Ser. No. 08/735,794) on Oct. 21th, 1996, which is now pending in USPTO.

In the above-mentioned U.S. application, a ceramic composition for absorbing electromagnetic waves and a method for manufacturing the same are disclosed. Though the ceramic composition can absorb electromagnetic waves, the efficiency of the ceramic composition may be insufficient with respect to the effect of the electromagnetic waves on the human body.

### Summary of the Invention

Considering the above-mentioned problems, it is a first object of the present invention to provide a paint composition for absorbing electromagnetic waves generated from electric devices in order to protect a human body from the electromagnetic wave.

It is a second object of the present invention to provide a method for manufacturing a paint composition for absorbing electromagnetic waves which is specially suited for manufacturing the paint composition.

Also, it is a third object of the present invention to provide a method for coating a paint composition for absorbing electromagnetic waves which is specially suited for coating the paint composition on an inside or an outside of the housing of the electric devices.

To achieve the first object, a paint composition for absorbing electromagnetic waves according to the present invention, comprises: by weight between about 45% and about 65% a ceramic composition, the ceramic composition comprising a raw powder comprising by weight between about 60% and about 80% Fe₂O₃, between about 15% and about 25% ZnO, between about 3% and about 8% CuO, and between about 3% and about 8% NiO, and a mixture around the raw powder comprising by weight between about 30% and about 50% water, between about 0.2% and about 0.6% a dispersing agent, between about 0.5% and about 1.0% a plasticizer, and between about 0.1% and about 0.4% a lubricant; by weight between about 7% and about 12% an acryl resin; by weight between about 20% and about 40% a solvent; and by weight between about 3% and about 8% an additive.

To achieve the second object; a method for manufacturing a paint composition for absorbing electromagnetic waves according to the present invention, comprises the steps of: i) homogeneously mixing a raw powder comprising by weight between about 60% and about 80% Fe₂O₃, between about 15% and about 25% ZnO, between about 3% and about 8% NiO, and between about 3% and about 8% CuO, with a mixture around the raw powder comprising by weight between about 30% and about 50% water, between about 0.2% and about 0.6% a dispersing agent, between about 0.5% and about 1.0% a plasticizer. and between about 0.1% and about 0.4% a lubricant; ii) grinding the mixed powder to form a first powder; iii) converting the first powder into granulates: iv) sintering the granulates to form a sintered body; v) cooling the sintered body; vi) grinding the sintered body to form a second powder; and vii) homogeneously mixing the second powder with an acryl resin, a solvent, and an additive.

To achieve the third object, a method for coating the paint composition for absorbing electromagnetic waves on an electric device, comprises the step of: a) spraying the paint composition on an inside or an outside of a housing of an electric device which generates electromagnetic waves so that the sprayed paint composition has a thickness of between about 15µm and about 40µm; and b) drying the sprayed paint composition.

### Detailed Description of the invention

The plasticizer comprises polyvinyl alcohol and Bi₂O₃ and the dispersing agent comprises hexamethanol.

Preferably, the solvent comprises by weight between about 50% and about 90% a main component and between about 15% and 45% a dilute. The main component comprises by weight between about 20% and about 40% ketone and between about 30% and about 50% ester. The diluent comprises by weight between about 10% and about 30% alcohol and between about 5% and about 15% aliphatic hydrocarbon.

The step ii) is performed by a wet grinding method and by using a ball mill for 45 hours to 50 hours in order to make the first powder having a particle distribution of between about 1µm and about 3µm, and the step iii) is performed by a spray drying method and by using a spray-drier so as to form the granulates having by weight between about 0.1% and about 0.4% moisture. Also, the step iii) is performed by keeping a temperature of an entrance of the spray-drier between about 550°C and about 600°C, and a temperature of an exit of the spray-drier between about 100°C and about 150°C.

The step vi) is performed by a grinding method and by using a ball mill for 2 hours to 4 hours in order to make the second powder having a particle distribution of between about 5µm and about 15µm.

The step iv) further comprises the steps of: heating the granulates in a furnace to a temperature of about 400°C for 3 hours after loading the granulates in the furnace; fixing a temperature of the furnace at 400°C for 1 hour; heating the shaped body in the furnace from 400°C to 900°C for 4 hours; fixing a temperature of the furnace at 900°C for 2 hours; heating the shaped body in the furnace from 900°C to 1200°C for 3 hours; and fixing a temperature of the furnace at 1200°C for 2 hours.

The step v) further comprises the steps of: cooling gradually the sintered body in the furnace for 40 hours to 60 hours after the furnace is made airtight; and cooling the sintered body in an atmosphere after the sintered body is unloaded from the furnace when a temperature of the furnace is below about 200°C.

Preferably, the step vii) is performed by mixing by weight between about 45% and about 65% the second powder between about 7% and about 12% the acryl resin, between about 20% and about 40% the solvent, and between about 3% and about 8% the additive.

Preferably, step a) is performed by using a spray gun having a diameter of between about 1.3mm and about 1.5mm and the step b) is performed at a temperature of between about 30°C and about 40°C for 10 minutes to 15 minutes.

In the case that the paint composition is coated on an outside of a housing of a cellular phone with a thickness of between about 20µm and about 35µm after the paint composition comprising by weight between about 45% and about 65% the ceramic composition, between about 7% and about 12% an acryl resin, between about 20% and about 40% a solvent, and between about 3% and about 8% an additive, is manufactured, the specific absorption rates are 0.13mW/g to 1.94mW/g when the position of the antenna of the cellular phone is down. When the paint composition is not coated on the cellular phone whose antenna is down, the specific absorption rates are 2.51mW/g to 2.53mW/g. Hence, the rates of reduction of specific absorption rate (SAR) according to the present invention are 23.0% to 94.8%. Also, after the paint composition is coated on the outside of the housing of the cellular phone to thicknesses of between 20µm and 35µm, the specific absorption rates are respectively 0.07mW/g to 1.36mW/g when the position of the antenna of the cellular phone is up. When the paint composition is not coated on the cellular phone whose antenna is up, the specific absorption rates are 1.69mW/g to 1.71mW/g. Hence, the rates of reduction of specific absorption rate according to the present invention are 19.5% to 95.9%.

Particularly, in the case that the paint composition is coated on an outside of a housing of a cellular phone with a thickness of about 35µm after the paint composition comprising by weight about 55% the ceramic composition about 10% an acryl resin, about 30% a solvent, and about 5% an additive, is manufactured, the specific absorption rate is 0.13mW/g when the position of the antenna of the cellular phone is down. When the paint composition is not coated on the cellular phone whose antenna is down, the specific absorption rate is 2.51mW/g. Therefore, the rate of reduction of specific (SAR) is 94.8%. Also, the SAR is 0.07mW/g when the position of the antenna of the cellular phone is up after the paint composition is coated on the outside of the housing of the cellular phone with a thicknesses of 35µm. When the paint composition is not coated on the cellular phone whose antenna is up, the specific absorption rates are 1.71mW/g. Therefore, the rate of reduction of the SAR is 95.9%.

However, the rate of reduction of the SAR is below 20% when the content of the ceramic composition in the paint composition is below by weight 40% because the viscosity of the paint composition is too low. When the content of the ceramic composition in the paint composition is above by weight 70%, the paint composition cannot be sprayed because the viscosity of the paint composition is too high.

Therefore, the paint composition according to the present invention can absorb electromagnetic waves generated from electric devices such as cellular phones, beepers, computers, cordless telephones, televisions, electric components in an automobiles, etc. by coating the paint composition on an inside or an outside of the housing of the electric devices.

Hereinafter, the present invention will be explained in detail with reference to the following working examples.

### Example 1

A raw powder comprising by weight about 70% Fe₂O₃, about 5% NiO, about 20% ZnO, and about 5% CuO, and a mixture around the raw powder comprising by weight about 40% water, about 0.4% hexamethanol as a dispersing agent, about 0.75% polyvinyl alcohol and about 0.001% Bi₂O₃ as plasticizer, and about 0.2% H₂ZnO₂ were homogeneously mixed.

The Fe₂O₃, the NiO, the ZnO, and the CuO were powders manufactured by Kyocera Co., Japan. The hexamethanol, the polyvinyl alcohol, Bi₂O₃, and H₂ZnO₂ were produced by Sannop Co., Japan.

Subsequently, the mixed powder was grounded by using a wet grinding method in a ball mill for about 2 hours to about 4 hours, preferably for 3 hours, in order to form a first powder. Then, the first powder was converted to granulates which had a particle distribution of between about 1µm and about 3µm. The granulates were formed by a spray drying method and by using a spray-drier. At that time, a temperature of an entrance of the spray-drier was maintained between about 550°C and about 600°C, preferably 580°C, and a temperature of an exit of the spray-drier was maintained between about 100°C and about 150°C, preferably 120°C, so that the granulates having a moisture content of between about 0.2% and about 0.3% were made. The granulates had a density of 1.05g/cm³ to 1.13g/cm³.

Subsequently, the granulates were sintered in a furnace for 15 hours. The sintering process of the granulates was divided into 6 steps as follows.

A first step was heating the granulates in the furnace to a temperature of about 400°C for 3 hours after loading the granulates in the furnace. A second step was fixing a temperature of the furnace at 400°C for 1 hour. A third step was heating the granulates in the furnace from 400°C to 900°C for 4 hours. A fourth step was fixing a temperature of the furnace at 900°C for 2 hours. A fifth step was heating the granulates in the furnace from 900°C to 1200°C for 3 hours. A sixth step was fixing a temperature of the furnace at 1200°C for 2 hours. As a result, a sintered body was obtained.

Then, the sintered body in the furnace was cooled gradually for 50 hours after the furnace was made airtight. When a temperature of the furnace was below 200°C, the sintered body was cooled in an atmosphere so as to produce a ceramic composition after the sintered body was unloaded from the furnace.

Then, the sintered body was ground by using a ball mill for 1 hour to 3 hours, preferably 2 hours, to make a second powder. The second powder had a particle distribution of between about 8µm and 10µm. Subsequently by weight about 50% the second powder, about 10% an acryl resin, about 35% a solvent, and about 5% an additive were homogeneously mixed so that a paint composition for absorbing electromagnetic waves was produced. In this case, the solvent comprised by weight about 70% a main component and about 30% a dilute. The main component comprised by weight about 30% ketone and about 40% ester. The dilute comprised by weight about 20% alcohol and about 10% aliphatic hydrocarbon.

Subsequently, the paint composition for absorbing electromagnetic waves was coated on an outside of a housing of a cellular phone manufactured by Hyundai Electronics Co., Korea. The paint composition was coated by using a spray gun with an interval of between about 15cm and about 20cm so that the paint composition had a homogeneous thickness of between about 20µm and about 35µm. At that time, the paint composition was coated on the outside of the housing of the cellular phone centering around an antenna of the cellular phone.

For coating the paint composition on the outside of the housing of the cellular phone, at first, the paint composition was sprayed on the outside of the housing of the cellular phone with the spray gun having a diameter of between about 1.3mm and about 1.5mm under a spray pressure of between about 3kg/cm² and about 5kg/cm². Then, the sprayed paint composition was dried at a temperature of between about 30°C and about 40°C for 10 to 15 minutes so that the paint composition was attached to the outside of the housing of the cellular phone.

The specific absorption rates of the paint composition coated on the cellular phone according to the present example are shown in Table 1. The specific absorption rates shown in Table 1 were measured by using an IDX System manufactured by IDX System Co., America. The IDX System is a measurement system of the specific absorption rate of electromagnetic waves.

**Table 1**

| | The position of antenna of the cellular phone | Not coating the paint composition on the cellular phone | Coating the paint composition on the cellular phone | | | Rate of Reduction (%) |
|---|---|---|---|---|---|---|
| Specific Absorption Rate (SAR) (mW/g) | DOWN | 2.53 | Thickness of the paint composition (µm) | 35 | 0.15 | 94.1 |
| | | | | 30 | 0.22 | 91.3 |
| | | | | 25 | 1.36 | 46.2 |
| | | | | 20 | 1.83 | 27.7 |
| | UP | 1.69 | | 35 | 0.07 | 95.9 |
| | | | | 30 | 0.11 | 93.5 |
| | | | | 25 | 1.32 | 21.9 |
| | | | | 20 | 1.32 | 21.9 |

Referring to Table 1, after the paint composition is coated on the outside of the housing of the cellular phone to thicknesses of 35µm, 30µm, 25µm, and 20µm, the specific absorption rates are respectively 0.15mW/g, 0.22mW/g, 1.36mW/g, and 1.83mW/g when the position of the antenna of the cellular phone is down. When the paint composition is not coated on the cellular phone whose antenna is down, the specific absorption rate is 2.53mW/g. Hence, the rates of reduction of the specific absorption rate are respectively 94.1%, 91.3%, 46.2%, and 27.7%.

Also, after the paint composition is coated on the outside of the housing of the cellular phone to thicknesses of 35µm, 30µm, 25µm, and 20µm, the specific absorption rates are respectively 0.07mW/g, 0.11mW/g, 1.32mW/g, and 1.32mW/g when the position of the antenna of the cellular phone is up. When the paint composition is not coated on the cellular phone whose antenna is up, the specific absorption rate is 1.69mW/g. Hence, the rates of reduction of the specific absorption rate are respectively 95.9%, 93.5%, 21.9%, and 21.9%.

Therefore, as shown in Table 1, the paint composition according to the example 1 can absorb much of the electromagnetic waves generated by the cellular phone. Though the paint composition is coated on the outside of the housing of the cellular phone in the example 1, the paint composition may be coated on an inside of the housing of the cellular phone for reducing the electromagnetic waves.

### Example 2

A raw powder comprising by weight about 65% Fe₂O₃, about 4% NiO, about 25% ZnO, and about 6% CuO, and a mixture around the raw powder comprising by weight about 40% water, about 0.3% hexamethanol as a dispersing agent, about 0.6% polyvinyl alcohol and about 0.002% Bi₂O₃ as plasticizer, and about 0.25% H₂ZnO₂ were homogeneously mixed.

In the example 2, the above-described materials were the same as those in the example 1.

Subsequently, the mixed powder was grounded by using a wet grinding method in a ball mill for about 2 hours to about 4 hours, preferably for 3 hours, in order to form a first powder. Then, the first powder was converted to granulates which had a particle distribution of between about 1µm and about 3µm. The granulates were formed by a spray drying method and by using a spray-drier. At that time, a temperature of an entrance of the spray-drier was maintained between about 550°C and about 600°C, preferably 580°C, and a temperature of an exit of the spray-drier was maintained between about 100°C and about 150°C, preferably 120°C, so that the granulates having a moisture content of between about 0.2% and about 0.3% were made. The granulates had a density of 1.05g/cm³ to 1.13g/cm³.

Subsequently, the granulates were sintered in a furnace for 15 hours. The sintering process of the granulates was divided into 6 steps as follows.

A first step was heating the granulates in the furnace to a temperature of about 400°C for 3 hours after loading the granulates in the furnace. A second step was fixing a temperature of the furnace at 400°C for 1 hour. A third step was heating the granulates in the furnace from 400°C to 900°C for 4 hours. A fourth step was fixing a temperature of the furnace at 900°C for 2 hours. A fifth step was heating the granulates in the furnace from 900°C to 1200°C for 3 hours. A sixth step was fixing a temperature of the furnace at 1200°C for 2 hours. As a result, a sintered body was obtained.

Then, the sintered body in the furnace was cooled gradually for 50 hours after the furnace was made airtight. When a temperature of the furnace was below 200°C, the sintered body was cooled in an atmosphere so as to produce a ceramic composition after the sintered body was unloaded from the furnace.

Then, the sintered body was ground by using a ball mill for 1 hour to 3 hours, preferably 2 hours, to make a second powder. The second powder had a particle distribution of between about 8µm and 10µm. Subsequently, by weight about 48% the second powder, about 8% an acryl resin, about 38% a solvent, and about 6% an additive were homogeneously mixed so that a paint composition for absorbing electromagnetic waves was produced. In this case, the solvent comprised by weight about 70% a main component and about 30% a dilute. The main component comprised by weight about 30% ketone and about 40% ester. The dilute comprised by weight about 20% alcohol and about 10% aliphatic hydrocarbon.

Subsequently, the paint composition for absorbing electromagnetic waves was coated on an outside of a housing of a cellular phone manufactured by Hyundai Electronics Co., Korea. The paint composition was coated by using a spray gun with an interval of between about 15cm and about 20cm so that the paint composition had a homogeneous thickness of between about 20µm and about 35µm. At that time, the paint composition was coated on the outside of the housing of the cellular phone centering around an antenna of the cellular phone.

For coating the paint composition on the outside of the housing of the cellular phone, at first, the paint composition was sprayed on the outside of the housing of the cellular phone with the spray gun having a diameter of between about 1.3mm and about 1.5mm under a spray pressure of between about 3kg/cm² and about 5kg/cm². Then, the sprayed paint composition was dried at a temperature of between about 30°C and about 40°C for 10 to 15 minutes so that the paint composition was attached to the outside of the housing of the cellular phone.

The specific absorption rates of the paint composition coated on the cellular phone according to the present example are shown in Table 2. The specific absorption rates shown in Table 2 were measured by using the IDX System manufactured by IDX System Co..

**Table 2**

| | The position of antenna of the cellular phone | Not coating the paint composition on the cellular phone | Coating the paint composition on the cellular phone | | | Rate of Reduction (%) |
|---|---|---|---|---|---|---|
| Specific Absorption Rate (SAR) (mW/g) | DOWN | 2.51 | Thickness of the paint composition (µm) | 35 | 0.16 | 93.6 |
| | | | | 30 | 0.24 | 90.4 |
| | | | | 25 | 1.34 | 46.6 |
| | | | | 20 | 1.86 | 25.9 |
| | UP | 1.70 | | 35 | 0.08 | 95.3 |
| | | | | 30 | 0.11 | 93.5 |
| | | | | 25 | 1.29 | 24.1 |
| | | | | 20 | 1.33 | 21.8 |

Referring to Table 2, after the paint composition is coated on the outside of the housing of the cellular phone to thicknesses of 35µm, 30µm, 25µm, and 20µm, the specific absorption rates are respectively 0.16mW/g, 0.24mW/g, 1.34mW/g, and 1.86mW/g when the position of the antenna of the cellular phone is down. When the paint composition is not coated on the cellular phone whose antenna is down, the specific absorption rate is 2.53mW/g. Hence, the rates of reduction of the specific absorption rate are respectively 93.6%, 90.4%, 46.6%, and 25.9%.

Also, after the paint composition is coated on the outside of the housing of the cellular phone to thicknesses of 35µm, 30µm, 25µm, and 20µm, the specific absorption rates are respectively 0.08mW/g, 0.11mW/g, 1.29mW/g, and 1.33mW/g when the position of the antenna of the cellular phone is up. When the paint composition is not coated on the cellular phone whose antenna is up, the specific absorption rate is 1.69mW/g. Hence, the rates of reduction of the specific absorption rate are respectively about 95.3%, 93.5%, 24.1%, and 21.8%.

Therefore, as shown in Table 2, the paint composition according to the example 2 can absorb much of the electromagnetic waves generated by the cellular phone. Though the paint composition is coated on the outside of the housing of the cellular phone in the example 2, the paint composition may be coated on an inside of the housing of the cellular phone for reducing the electromagnetic waves.

### Example 3

A raw powder comprising by weight about 69% Fe₂O₃, about 8% NiO, about 15% ZnO, and about 8% CuO, and a mixture around the raw powder comprising by weight about 40% water, about 0.5% hexamethanol as a dispersing agent about 0.7% polyvinyl alcohol and about 0.003% Bi₂O₃ as plasticizer, and about 0.3% H₂ZnO₂ were homogeneously mixed.

In the example 3, the above-described materials were the same as those in the example 1. Also, in the present example, the steps for forming a first powder, forming a sintered body, and forming a second powder were the same as those in example 1.

Then, by weight about 55% the second powder, about 10% an acryl resin, about 30% a solvent, and about 5% an additive were homogeneously mixed so that a paint composition for absorbing electromagnetic waves was produced. In this case, the composition of the solvent was the same as that in example 1.

Subsequently, the paint composition for absorbing electromagnetic waves was coated on an outside of a housing of a cellular phone manufactured by Hyundai Electronics Co.. The paint composition was coated by using a spray gun with an interval of between about 15cm and about 20cm so that the paint composition had a homogeneous thickness of between about 20µm and about 35µm. At that time, the paint composition was coated on the outside of the housing of the cellular phone centering around an antenna of the cellular phone.

The coating steps of the paint composition according to the present example were the same as those in the example 1.

The specific absorption rates of the paint composition coated on the cellular phone according to the present example are shown in Table 3. The specific absorption rates shown in Table 3 were measured by using the IDX System manufactured by IDX System Co..

**Table 3**

| | The position of antenna of the cellular phone | Not coating the paint composition on the cellular phone | Coating the paint composition on the cellular phone | | | Rate of Reduction (%) |
|---|---|---|---|---|---|---|
| Specific Absorption Rate (SAR) (mW/g) | DOWN | 2.51 | Thickness of the paint composition (µm) | 35 | 0.13 | 94.8 |
| | | | | 30 | 0.19 | 92.4 |
| | | | | 25 | 1.33 | 47.0 |
| | | | | 20 | 1.79 | 28.7 |
| | UP | 1.71 | | 35 | 0.07 | 95.9 |
| | | | | 30 | 0.11 | 93.6 |
| | | | | 25 | 1.30 | 24.0 |
| | | | | 20 | 1.32 | 22.8 |

Referring to Table 3, after the paint composition is coated on the outside of the housing of the cellular phone to thicknesses of 35µm, 30µm, 25µm, and 20µm, the specific absorption rates are respectively 0.13mW/g, 0.19mW/g, 1.33mW/g, and 1.79mW/g when the position of the antenna of the cellular phone is down. When the paint composition is not coated on the cellular phone whose antenna is down, the specific absorption rate is 2.51mW/g. Hence, the rates of reduction of the specific absorption rate are respectively about 94.8%, 92.4%, 47.0%, and 28.7%.

Also, after the paint composition is coated on the outside of the housing of the cellular phone to thicknesses of 35µm, 30µm, 25µm, and 20µm, the specific absorption rates are respectively 0.07mW/g, 0.11mW/g. 1.30mW/g, and 1.32mW/g when the position of the antenna of the cellular phone is up. When the paint composition is not coated on the cellular phone whose antenna is up, the specific absorption rate is 1.71mW/g. Hence, the rates of reduction of the specific absorption rate are respectively about 95.9%, 93.6%, 24.0%, and 22.8%.

Therefore, as shown in Table 3, the paint composition according to the example 3 can absorb much of the electromagnetic waves generated by the cellular phone.

### Example 4

A raw powder comprising by weight about 75% Fe₂O₃, about 4% NiO, about 17% ZnO, and about 4% CuO, and a mixture around the raw powder comprising by weight about 40% water, about 0.4% hexamethanol as a dispersing agent, about 0.8% polyvinyl alcohol and about 0.002% Bi₂O₃ as plasticiser, and about 0.25% H₂ZnO₂ were homogeneously mixed.

In the example 4, the above-described materials were the same as those in the example 1. Also, in the present example, the steps for forming a first powder, forming a sintered body, and forming a second powder were the same as those in example 1.

Then, by weight about 60% the second powder, about 10% an acryl resin, about 25% a solvent, and about 5% an additive were homogeneously mixed so that a paint composition for absorbing electromagnetic waves was produced. In this case, the composition of the solvent was the same as that in example 1.

Subsequently, the paint composition for absorbing electromagnetic waves was coated on an outside of a housing of a cellular phone manufactured by Hyundai Electronics Co.. The paint composition was coated by using a spray gun with an interval of between about 15cm and about 20cm so that the paint composition had a homogeneous thickness of between about 20µm and about 35µm. At that time, the paint composition was coated on the outside of the housing of the cellular phone centering around an antenna of the cellular phone.

The coating steps of the paint composition according to the present example were the same as those in the example 1.

The specific absorption rates of the paint composition coated on the cellular phone according to the present example are shown in Table 4. The specific absorption rates shown in Table 4 were measured by using the IDX System manufactured by IDX System Co..

**Table 4**

| | The position of antenna of the cellular phone | Not coating the paint composition on the cellular phone | Coating the paint composition on the cellular phone | | | Rate of Reduction (%) |
|---|---|---|---|---|---|---|
| Specific Absorption Rate (SAR) (mW/g) | DOWN | 2.52 | Thickness of the paint composition (µm) | 35 | 0.19 | 92.5 |
| | | | | 30 | 0.26 | 89.7 |
| | | | | 25 | 1.38 | 45.2 |
| | | | | 20 | 1.94 | 23.0 |
| | UP | 1.69 | | 35 | 0.14 | 91.7 |
| | | | | 30 | 0.16 | 90.5 |
| | | | | 25 | 1.35 | 20.1 |
| | | | | 20 | 1.36 | 19.5 |

Referring to Table 4, after the paint composition is coated on the outside of the housing of the cellular phone to thicknesses of 35µm, 30µm, 25µm, and 20µm, the specific absorption rates are respectively 0.19mW/g, 0.26mW/g, 1.38mW/g, and 1.94mW/g when the position of the antenna of the cellular phone is down. When the paint composition is not coated on the cellular phone whose antenna is down, the specific absorption rate is 2.52mW/g. Hence, the rates of reduction of the specific absorption rate are respectively about 92.5%, 89.7%, 45.2%, and 23.0%.

Also, after the paint composition is coated on the outside of the housing of the cellular phone to thicknesses of 35µm, 30µm, 25µm, and 20µm, the specific absorption rates are respectively 0.14mW/g, 0.16mW/g, 1.35mW/g, and 1.36mW/g when the position of the antenna of the cellular phone is up. When the paint composition is not coated on the cellular phone whose antenna is up, the specific absorption rate is 1.69mW/g. Hence, the rates of reduction of the specific absorption rate are respectively about 91.7%, 90.5%, 20.1%, and 19.5%.

Therefore, as shown in Table 4, the paint composition according to the example 4 can absorb much of the electromagnetic waves generated by the cellular phone.

As it is described above, the paint composition according to the present invention can absorb much of the electromagnetic waves generated by electric devices by coating the paint composition on insides or outsides of the housings of the electric devices such as wired or wireless communication devices, household electric apparatuses, electric apparatuses for broadcasting, medical electric instruments, electric apparatuses for offices, electrical distributing apparatuses, electric motors, electric components of an automobile, electric measuring instruments, and so on.

The wired or wireless communication devices comprise cellular phones, beepers, and wired or wireless transmitters, and the household electric apparatuses comprise telephones, cordless telephones, computers, televisions, microwave ovens, hair driers, and electric razors. The electrical distributing apparatuses comprise electric lights, electric heaters, electric cookers, plug receptacles, power-transmission lines, transformers, and electric generators.

The paint composition for absorbing electromagnetic waves according to the present invention can reduce the electric interference or the noise of the electric devices such as EMC, EMI, and RFI. The paint composition according to the present invention can be used for shielding a shield room for measuring electromagnetic waves, and can be coated on clothes or accessories which are used in a laboratory. The paint composition according to the present invention can be sprayed by a spray method or a powder extruding method on the outside of shield cables such as a communication line, a distributing wire, and a power-transmission line for reducing the electromagnetic waves generated from the shield cables. Also, the paint composition according to the present invention can be applicable to building materials such as a wallpaper, a tile, and a paint.

While the present invention has been particularly shown and described with reference to particular embodiments thereof, it will be understood by those skilled in the art that various changes in form and detail may be effected therein without departing from the spirit and scope of the invention as defined by the appended claims.

## Claims

1. A paint composition for absorbing electromagnetic waves, comprising:
by weight between about 45% and about 65% a ceramic composition, said ceramic composition comprising a raw powder comprising by weight between about 60% and about 80% Fe₂O₃, between about 15% and about 25% ZnO, between about 3% and about 8% CuO, and between about 3% and about 8% NiO, and a mixture around said raw powder comprising by weight between about 30% and about 50% water, between about 0.2% and about 0.6% a dispersing agent, between about 0.5% and about 1.0% a plasticizer, and between about 0.1% and about 0.4% a lubricant;
by weight between about 7% and about 12% an acryl resin;
by weight between about 20% and about 40% a solvent; and
by weight between about 3% and about 8% an additive.

2. The paint composition for absorbing electromagnetic waves as claimed in claim 1, wherein said plasticizer comprises polyvinyl alcohol and Bi₂O₃.

3. The paint composition for absorbing electromagnetic waves as claimed in claim 1, wherein said dispersing agent comprises hexamethanol.

4. The paint composition for absorbing electromagnetic waves as claimed in claim 1, wherein said solvent comprises by weight between about 50% and about 90% a main component and between about 15% and 45% a dilute.

5. The paint composition for absorbing electromagnetic waves as claimed in claim 4, wherein said main component comprises by weight between about 20% and about 40% ketone and between about 30% and about 50% ester.

6. The paint composition for absorbing electromagnetic waves as claimed in claim 4, wherein said diluent comprises by weight between about 10% and about 30% alcohol and between about 5% and about 15% aliphatic hydrocarbon.

7. A method for manufacturing a paint composition for absorbing electromagnetic waves, comprising the steps of:
i) homogeneously mixing a raw powder comprising by weight between about 60% and about 80% Fe₂O₃, between about 15% and about 25% ZnO, between about 3% and about 8% NiO, and between about 3% and about 8% CuO, with a mixture around the raw powder comprising by weight between about 30% and about 50% water, between about 0.2% and about 0.6% a dispersing agent, between about 0.5% and about 1.0% a plasticizer, and between about 0.1% and about 0.4% a lubricant;
ii) grinding the mixed powder to form a first powder;
iii) converting the first powder into granulates;
iv) sintering the granulates to form a sintered body; v) cooling the sintered body;
vi) grinding the sintered body to form a second powder: and
vii) homogeneously mixing the second powder with an acryl resin, a solvent, and an additive.

8. The method for manufacturing a paint composition as claimed in claim 7, wherein said step ii) is performed by a wet grinding method and by using a ball mill for 45 hours to 50 hours in order to make the first powder having a particle distribution of between about 1µm and about 3µm.

9. The method for manufacturing a paint composition as claimed in claim 7, wherein said step iii) is performed by a spray drying method and by using a spray-drier so as to form the granulates having by weight between about 0.1 % and about 0.4% moisture.

10. The method for manufacturing a paint composition as claimed in claim 9, wherein said step iii) is performed by maintaining a temperature of an entrance of the spray-drier between about 550°C and about 600°C, and a temperature of an exit of the spray-drier between about 100°C and about 150°C.

11. The method for manufacturing a paint composition as claimed in claim 7, wherein said step vi) is performed by a grinding method and by using a ball mill for 2 hours to 4 hours in order to make the second powder having a particle distribution of between about 5µm and about 15µm.

12. The method for manufacturing a paint composition as claimed in claim 7, wherein said step iv) further comprises the steps of:
heating the granulates in a furnace to a temperature of about 400°C for 3 hours after loading the granulates in the furnace;
fixing a temperature of the furnace at 400°C for 1 hour;
heating the shaped body in the furnace from 400°C to 900°C for 4 hours;
fixing a temperature of the furnace at 900°C for 2 hours;
heating the shaped body in the furnace from 900°C to 1200°C for 3 hours: and
fixing a temperature of the furnace at 1200°C for 2 hours.

13. The method for manufacturing a paint composition as claimed in claim 7, wherein said step v) further comprises the steps of:
cooling gradually the sintered body in the furnace for 40 hours to 60 hours after the furnace is made airtight; and
cooling the sintered body in an atmosphere after the sintered body is unloaded from the furnace when a temperature of the furnace is below about 200°C.

14. The method for manufacturing a paint composition as claimed in claim 7, wherein said step vii) is performed by mixing by weight between about 45% and about 65% the second powder, between about 7% and about 12% the acryl resin, between about 20% and about 40% the solvent, and between about 3% and about 8% the additive.

15. A method for coating on an electric device the paint composition for absorbing electromagnetic waves according to claim 1, comprising the steps of:
a) spraying the paint composition on an inside or an outside of a housing of an electric device which generates electromagnetic waves so that the sprayed paint composition has a thickness of between about 15µm and about 40µm; and
b) drying the sprayed paint composition.

16. The method for coating on an electric device the paint composition for absorbing electromagnetic waves according to claim 1 as claimed in claim 15, wherein said step a) is performed by using a spray gun having a diameter of between about 1.3mm and about 1.5mm and said step b) is performed at a temperature of between about 30°C and about 40°C for 10 minutes to 15 minutes.

17. A method for coating the paint composition for absorbing electromagnetic waves according to claim 1, wherein the paint composition is coated on clothes and on accessories used in a laboratory with a thickness of between 15µm and 40µm.

18. A method for coating the paint composition for absorbing electromagnetic waves according to claim 1, wherein the paint composition is coated on an outside of a shield cable such as a communication line or a power-transmission line with a thickness of between 15µm and 40µm by a powder extruding method.

19. The method for coating the paint composition for absorbing electromagnetic waves according to claim 1 as claimed in claim 18, wherein the paint composition is coated by a powder injection method.

20. A method for coating the paint composition for absorbing electromagnetic waves according to claim 1, wherein the paint composition is coated on a building material such as a wallpaper, a tile, or a paint with a thickness of between 15µm and 40µm by a powder injection method.
